# DEMANDE DE BREVET EUROPEEN

(11) **EP 3 373 054 A1**
(43) Date de publication de la demande: **12.09.2018**
(21) Numéro de dépôt: 18160398.6
(22) Date de dépôt: 07.03.2018
(51) Int. Cl.: G02B 6/42, H01R 13/6587, H05K 9/00

(54) **ENSEMBLE DE CONNEXION D'UNE FICHE A UNE EMBASE DE PANNEAU DE BOITIER D'EQUIPEMENT ELECTRONIQUE, INTEGRANT UN MOYEN DE REGULATION THERMIQUE, FICHE ET EMBASE ASSOCIEES**

(30) Priorité: 10.03.2017 FR 1751978
(71) Demandeur: RADIALL, 93300 Aubervilliers (FR)
(72) Inventeur: DUPEUX, Benoit, 38470 VATILIEU (FR); LOMUSCIO, Dominique, 38590 SILLANS (FR); BOURGEAS, Fabien, 38500 SAINT NICOLAS DE MACHERIN (FR); BADIQUE, Vivien, 68920 WETTOLSHEIM (FR)
(74) Mandataire: Nony

(57) **Abrégé**

La présente invention concerne un ensemble de connexion d'une fiche à une embase d'un panneau de boitier d'équipement électronique.

Selon l'invention on, définit, une interface thermique active, adaptée entre le convertisseur optoélectronique ou électronique et l'environnement extérieur qui est parfaitement intégrée dans la fiche ou l'embase de connexion.

## Description

### Domaine technique

La présente invention concerne un ensemble de connexion d'une fiche à une embase d'un panneau de boitier d'un équipement électronique.

La fiche est destinée à être montée sur au moins un câble supportant un ou plusieurs contacts, qui sont une interface de convertisseur optoélectronique encore appelé *transceiver* en anglais, de type SFP/SFP+, QSFP/QSFP+ ou XFP, ou encore une interface de convertisseur électronique de type RJ45.

L'invention s'applique pour les fiches de connexion aux embases d'équipements électroniques qui mettent en oeuvre plusieurs voies optiques et/ou électriques avec des connexions, que l'on retrouve en environnement extérieur et/ou en conditions sévères notamment dans les installations de télécommunications telles que des antennes-relais de téléphonie mobile, dans les réseaux de transmission de données à haut débit vers l'habitat ou l'industrie, dans les réseaux de caméras de surveillance ou encore pour la transmission de données dans des installations ferroviaires.

Les applications particulièrement ciblées par l'invention sont la connexion d'équipements de télécommunication tels que les stations de base à convertisseur optoélectronique QSFP/QSFP+ dans une tête radio distante (RRH acronyme anglais pour « Remote Radio Head ») pour le marché des communications sans fil.

L'invention vise à éviter l'arrêt de convertisseur(s) optoélectronique(s) ou électronique(s) intégré à la fiche d'un ensemble de connexion, du fait d'une chaleur importante à laquelle il est soumis lors de son propre fonctionnement et/ou du fonctionnement de l'équipement électronique.

L'invention consiste aussi de manière réversible à pouvoir réchauffer l'environnement du convertisseur afin de le maintenir dans sa plage de fonctionnement dans un environnement de température trop basse.

Bien que décrite en référence à un convertisseur optoélectronique QSFP/QSFP+, l'invention s'applique à tout ensemble de connexion avec un autre type de convertisseur comme un convertisseur électronique de type RJ45.

### Art antérieur

Il est connu d'utiliser des convertisseurs optoélectroniques muni de moyens de connexion tel que décrit par exemple dans le brevet US 6,430,053. Ce convertisseur optoélectronique peut être porté par une embase raccordée à une carte de circuit imprimé, comme décrit par exemple dans la demande US 8,784,139.

La déposante a proposé dans le brevet US 9,170,385 B2 l'intégration d'un convertisseur optoélectronique au sein d'une fiche, avec la possibilité de démonter ce dernier en vue d'une interchangeabilité. Cette solution a notamment pour avantage important que le convertisseur optoélectronique ne dégage pas de chaleur dans une tête radio distante (RRH) d'une station de base, i.e. du côté de l'équipement électronique autour de la carte imprimée.

Il s'avère cependant que l'utilisation d'une telle fiche en tant qu'émetteur-récepteur avec un convertisseur de type QSFP/QSFP+ dans une tête radio distante (RRH) d'une station de base produit une grande quantité de chaleur. De plus, généralement les autres composants de l'équipement dégagent eux-mêmes une grande quantité de chaleur. La température typique est aux alentours de 84 à 95°C dans l'environnement du côté de l'équipement électronique autour de la carte imprimée.

Or, un convertisseur optoélectronique QSFP/QSFP+ est conçu pour pouvoir fonctionner jusqu'à une température de l'ordre de 70°C. A cette température et au-delà, une sécurité de protection du convertisseur stoppera son fonctionnement et la tête RRH cessera de transmettre des données. En outre, la limite basse de température de fonctionnement de ce genre de convertisseur est généralement de 0°C et il ne fonctionnera pas de façon correcte pour des températures plus basses.

Une solution pourrait consister à intégrer un dispositif de refroidissement à l'intérieur de l'équipement électronique, i.e. du côté de la carte de circuit électronique, mais un tel dispositif serait trop volumineux et coûteux. Il serait aussi peu efficace car le châssis de l'équipement seul serait insuffisant pour dissiper la chaleur dégagée par l'ensemble des composants vers l'extérieur de l'équipement.

A l'inverse, lorsque l'environnement extérieur à l'équipement électronique est à des températures très basses, il subsiste un risque que le convertisseur optoélectronique ou convertisseur électronique ne soit plus dans sa plage de température de fonctionnement.

Il existe donc un besoin d'améliorer l'ensemble de connexion d'une fiche à convertisseur optoélectronique ou électronique, intégrée à une embase de boitier d'équipement électronique, en particulier d'une tête radio distante (RRH) d'une station de base, afin de remédier à tout ou partie des inconvénients de l'art antérieur cités ci-dessus, notamment en vue d'éviter l'arrêt de transmission des données par la tête RRH du fait de la grande quantité de chaleur dégagée par l'équipement électronique et/ou le convertisseur ou du fait des faibles températures de l'environnement extérieur à l'équipement électronique..

Le but de l'invention est de répondre au moins en partie à ce besoin.

### Exposé de l'invention

Pour ce faire, l'invention concerne un ensemble de connexion comprenant :
- au moins une fiche, destinée à être montée sur au moins un câble dont une extrémité supporte un ou plusieurs contacts, comprenant un corps comprenant :
   - une partie avant qui s'étend selon un axe longitudinal (X), la partie avant étant adaptée pour loger et maintenir au moins un convertisseur optoélectronique ou électronique connecté au(x) contact(s) du câble;
   - une partie arrière formant un fourreau, conformée pour loger l'extrémité du câble supportant elle-même le(s) contact(s) ;
- au moins une embase dans laquelle la partie avant du corps de fiche est logée lorsque le convertisseur optoélectronique ou électronique de la fiche est connecté au(x) contact(s) supportés par une carte de circuit électronique d'un équipement électronique ;
- au moins un moyen de régulation thermique actif, logé et maintenu soit dans la partie avant du corps de fiche, soit dans l'embase, le moyen de régulation thermique actif étant adapté pour éviter que le convertisseur ne se trouve en dehors de sa plage de températures de fonctionnement, dans la configuration connectée avec les contacts de la carte électronique, lors du fonctionnement de l'équipement électronique.

Par moyen de régulation thermique actif, on entend au minimum un échangeur thermique. Il peut aussi comprendre son système de pilotage. On précise qu'au sens de l'invention, un moyen de régulation thermique actif permet de forcer la circulation d'air ou d'un autre fluide caloporteur à l'intérieur de la partie avant du corps de fiche ou de l'embase.

Autrement dit, on définit selon l'invention, une interface thermique active, adaptée entre le convertisseur optoélectronique ou électronique et l'environnement extérieur qui est parfaitement intégrée dans la fiche ou l'embase de connexion.

Grâce à l'implantation du module de régulation thermique actif selon l'invention, on évite tout arrêt intempestif, dysfonctionnement ou endommagement du convertisseur optoélectronique ou électronique, soit lorsqu'il est placé dans un environnement hors de sa plage thermique de fonctionnement, soit lorsqu'il est surchauffé par l'environnement du côté de la carte de circuit électronique de l'équipement électronique ou son propre dégagement de chaleur, soit lorsqu'il est placé dans un environnement extérieur à basses températures. La détection de la température au niveau du convertisseur peut être faite par la fonction intégrée du convertisseur, ou par la fonction intégrée du module Peltier, ou par l'ajout d'un capteur de température indépendant au plus près du convertisseur, particulièrement lorsque le convertisseur n'est pas encore activé.

Ainsi, le système du pilotage du module de régulation actif peut être relié à un capteur de température, agencé à l'extérieur du convertisseur.

De préférence, l'actionnement du module de régulation thermique permet d'éviter le déclenchement de l'autoprotection du convertisseur optoélectronique ou électronique.

Par conséquent, le module de régulation thermique actif permet d'éviter toute interruption de transmission de données par une tête RRH qui est munie d'un ensemble de connexion selon l'invention.

On peut aisément dimensionner le module de régulation thermique et son alimentation électrique éventuelle pour qu'il devienne actif avant la température de fonctionnement maximale du convertisseur optoélectronique ou électronique, typiquement de l'ordre de 70 °C pour un module QSFP/QSFP+, et de 85°C pour un module SFP/SFP+.

Dans le cas où le module de régulation thermique présente un fonctionnement réversible en inversant la polarité de son alimentation, on peut aisément dimensionner le module pour qu'il devienne actif avant d'atteindre la température de fonctionnement minimale du convertisseur, typiquement de 0°C.

L'intégration du module de régulation thermique actif au sein même de la fiche ou de l'embase est réalisée avec peu ou pas de modification des dimensions externes de la fiche ou de l'embase, ce qui permet ainsi de toujours pouvoir effectuer les connexions souhaitées dans un environnement restreint et/ou difficile d'accès.

Le fait d'intégrer le module de régulation thermique actif au sein même de la fiche ou de l'embase évite d'avoir à redéfinir l'équipement électronique et notamment de concevoir à nouveau un schéma de la carte électronique, puisque seule une alimentation électrique éventuelle pour le module est à prévoir sur cette dernière.

Avantageusement, le convertisseur optoélectronique est de type SFP/SFP+, QSFP/QSFP+, XFP.

Selon un mode de réalisation avantageux, le moyen de régulation thermique actif est un module Peltier alimenté électriquement depuis la carte de circuit électronique. Par « module Peltier », on entend ici et dans le cadre de l'invention le sens technologique usuel, à savoir un composant qui met en oeuvre la thermoélectricité par l'effet Peltier et qui est alimenté par un courant pour le transformer en une différence de température. Dans le contexte de l'invention, la face dite froide est en appui-plan directement contre le convertisseur optoélectronique ou indirectement contre une surface d'échange elle-même en conduction avec le convertisseur, tandis que l'autre face dite face chaude est orientée vers l'environnement extérieur. Lorsque la polarité du module Peltier est inversée, la face en appui-plan contre le convertisseur est alors dite chaude alors que la face alors dite froide est orientée vers l'extérieur, conformément au mode de fonctionnement réversible du module.

Selon ce mode et une variante avantageuse d'intégration dans l'embase :
- la partie avant du corps de fiche comprend une surface d'échange thermique par conduction avec le convertisseur optoélectronique ou électronique logé et maintenu à l'intérieur de la partie avant;
- l'embase comprend des rails de maintien pour maintenir le module Peltier.

De préférence, l'embase loge un élément compressible en matériau conducteur thermique adapté pour appliquer un effort sur le module Peltier maintenu dans les rails, de sorte à mettre en appui-plan ce dernier contre la surface d'échange thermique de la partie avant. Il permet également de compenser les défauts de forme tels que défauts de planéité ou rugosité entre les surfaces en contact et donc d'optimiser le transfert thermique vers l'extérieur.

Selon une variante avantageuse d'intégration dans la fiche, le module Peltier est logé et maintenu dans une cavité de la partie avant du corps de fiche, avec un appui-plan contre le convertisseur optoélectronique.

De préférence, un élément compressible en matériau conducteur thermique est alors logé dans l'embase, l'élément compressible étant adapté pour appliquer un effort sur le module Peltier logé dans la fiche, de sorte à mettre en appui-plan ce dernier contre le convertisseur optoélectronique. Il permet également de compenser les défauts de forme tels que défauts de planéité ou rugosité entre les surfaces en contact et donc d'optimiser le transfert thermique vers l'extérieur. Cet élément compressible peut être par exemple en silicone chargé en particules céramiques.

En lieu et place d'un module Peltier, le moyen de régulation thermique actif peut être basé sur la circulation d'un fluide caloporteur ou tout autre type de caloduc actif. On peut également associer une résistance chauffante au module Peltier pour compléter l'efficacité du réchauffement du convertisseur si nécessaire.

Avantageusement, l'embase comprend, sur sa périphérie extérieure, une pluralité d'ailettes de refroidissement adaptées pour évacuer la chaleur elle-même évacuée par le module de régulation thermique actif dans l'environnement extérieur. Ainsi, grâce à ces ailettes de refroidissement, la chaleur du convertisseur optoélectronique évacuée par le module de régulation thermique actif est dissipée plus facilement et rapidement dans l'environnement extérieur.

Selon une variante de réalisation, le(s) convertisseur(s) optoélectronique(s) peu(ven)t faire saillie au-delà de la partie avant.

Selon un mode de réalisation avantageux, l'ensemble comprend une pluralité de pattes flexibles en matériau conducteur électrique, réparties à la périphérie extérieure de la partie avant (3), les pattes flexibles étant adaptées pour rester en contact mécanique avec l'intérieur de l'embase lorsque la partie avant du corps est logée dans cette dernière.

Avantageusement, la pluralité des pattes flexibles constitue un dispositif de protection contre les interférences électromagnétiques (EMI pour « Electro Magnetic Interférence » en anglais) et/ou avantageusement également un parafoudre. Ainsi les pattes flexibles assurent une parfaite continuité de masse et/ou de blindage électromagnétique. La continuité de masse peut de préférence être assurée au moyen d'une tresse métallique fixée autour du câble sur lequel la fiche est montée et reliée au potentiel de la terre à son extrémité opposée.

Selon une variante de réalisation, les pattes flexibles peuvent être supportées par une bague en matériau conducteur électrique montée coulissante autour de la partie avant du corps de fiche.

Alternativement, on peut réaliser intégralement la pluralité des pattes flexibles avec la partie avant du corps, c'est-à-dire en une seule pièce.

Alternativement encore, la pluralité des pattes flexibles peut être réalisée dans une pièce annulaire agencée autour de la cavité de l'embase, destinée à être disposée entre celle-ci et le panneau d'équipement électronique.

Cette pièce peut permettre aussi de connecter électriquement l'embase avec le châssis dans le cas où un joint thermiquement isolant et électriquement isolant est interposé entre ce panneau et l'embase.

A des fins de masse et/ou blindage électromagnétique, la partie avant, la bague éventuelle supportant les pattes flexibles ou la pièce annulaire agencée sur l'embase peuvent être réalisées en métal, par exemple en aluminium ou zamak moulé sous pression, revêtu d'une protection anticorrosive et électriquement conductrice ou encore en matière(s) plastique(s) avec métallisation.

Selon un mode de réalisation avantageux, la fiche comprend un levier de verrouillage à une embase, le levier de verrouillage étant monté pivotant sur la partie arrière du corps de fiche, le levier comprenant deux crochets de verrouillage répartis de part et d'autre de la partie arrière et destinés à coopérer avec deux ergots de verrouillage répartis de part et d'autre de l'embase.

Selon une variante avantageuse de réalisation, la fiche peut comprendre un joint d'étanchéité porté par la partie avant ou par la partie arrière du corps de fiche.

Ce joint est adapté pour réaliser l'étanchéité à l'interface entre la fiche et l'embase dans laquelle la partie avant du corps de fiche est destinée à se loger. Avec un tel joint, on s'assure d'une parfaite étanchéité à l'interface entre fiche et embase.

En outre, lorsqu'on verrouille la fiche sur l'embase l'effort de verrouillage peut être transmis efficacement et de manière uniforme au joint afin de le comprimer. De préférence, le joint d'étanchéité peut être porté par la bague supportant les pattes flexibles.

Selon une caractéristique avantageuse, la partie avant du corps de fiche comporte des moyens de maintien amovible du convertisseur optoélectronique.

L'invention concerne également une fiche, destinée à être montée sur au moins un câble dont une extrémité supporte un ou plusieurs contacts, comprenant un corps comprenant :
- une partie avant qui s'étend selon un axe longitudinal (X), la partie avant étant conformée pour venir se loger dans une embase, la partie avant étant adaptée pour loger et maintenir au moins un convertisseur optoélectronique ou électronique connecté au(x) contact(s) du câble;
- une partie arrière formant un fourreau, conformée pour loger l'extrémité du câble supportant elle-même le(s) contact(s) ;
- au moins un moyen de régulation thermique actif, logé et maintenu dans la partie avant du corps de fiche.

L'invention concerne enfin une embase destinée à loger la partie avant du corps d'une fiche, dans laquelle au moins un moyen de régulation thermique actif est logé et maintenu.

### Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :

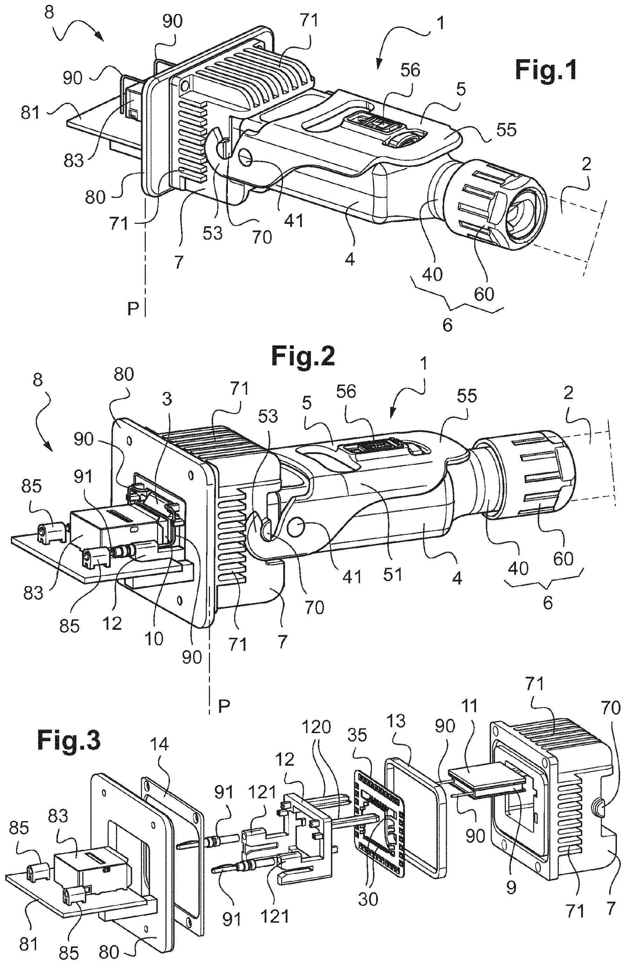

- la figure 1 est une vue en perspective d'un premier exemple d'ensemble de connexion selon l'invention, avec une fiche intégrant un convertisseur optoélectronique de type « transceiver QSFP/QSFP+ » telle qu'elle en configuration connectée et verrouillée à une embase d'un panneau de boitier d'équipement électronique, le convertisseur optoélectronique de la fiche étant connecté au contact du composant électronique monté en surface de carte de circuit imprimée de l'équipement électronique, l'embase logeant et maintenant un module Peltier conforme à l'invention alimenté depuis la carte de circuit imprimée;
- la figure 2 est une vue analogue à la figure 1 avec une alimentation électrique du module Peltier différente;
- la figure 3 est une vue en éclaté de l'embase selon l'invention, telle que montré sur les figures 1 et 2;
- les figures 4A et 4B sont des vues en perspective et respectivement avant et arrière de l'embase de la figure 3 dans laquelle le module Peltier, son support et l'alimentation électrique du module sont logés et maintenus;
- les figures 5A et 5B sont des vues en perspective et respectivement avant et arrière de l'embase nue de la figure 3, c'est-à-dire sans le module Peltier, son support et l'alimentation électrique du module;
- la figure 6 est une vue en perspective de la fiche de l'ensemble de connexion selon les figures 1 et 2 ;
- les figures 7A et 7B montrent en vue en perspective les différentes étapes de montage de l'embase selon la figure 3 à un panneau de boitier d'équipement électronique ainsi que de la connexion d'alimentation électrique du module Peltier;
- la figure 8 est une vue en coupe longitudinale de l'ensemble de connexion selon le premier exemple de la figure 2 avec la fiche telle qu'elle en configuration connectée et verrouillée à une embase d'un panneau de boitier d'équipement électronique, le convertisseur optoélectronique de la fiche étant connecté au contact du composant électronique monté en surface de carte de circuit imprimée de l'équipement électronique l'embase logeant et maintenant un module Peltier conforme à l'invention alimenté depuis la carte de circuit imprimée;

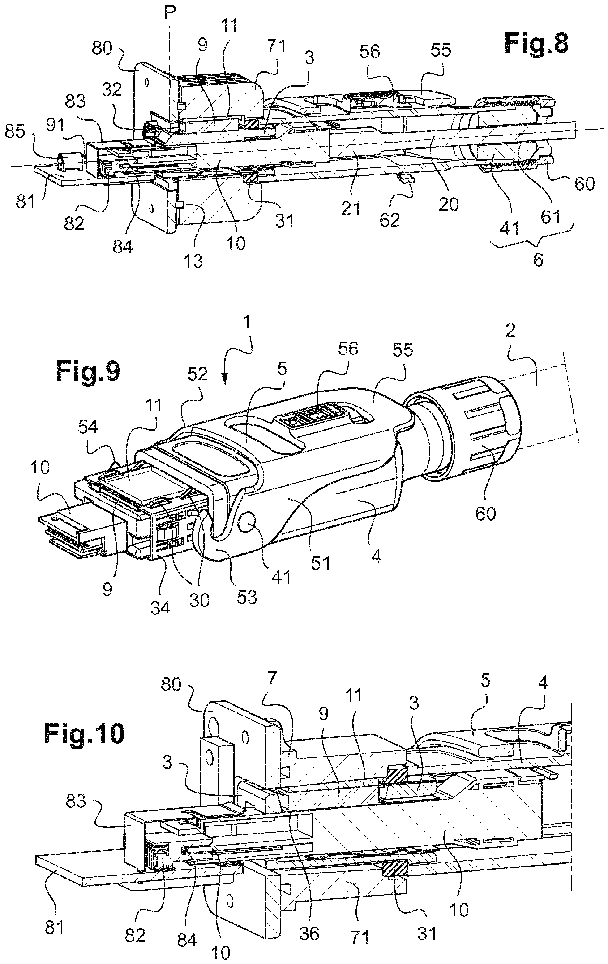

- la figure 9 est une vue en perspective d'un deuxième exemple d'ensemble de connexion selon l'invention, avec une fiche intégrant un convertisseur optoélectronique de type « transceiver QSFP/QSFP+ » telle qu'elle en configuration connectée et verrouillée à une embase d'un panneau de boitier d'équipement électronique, le convertisseur optoélectronique de la fiche étant connecté au contact du composant électronique monté en surface de carte de circuit imprimée de l'équipement électronique, la fiche logeant et maintenant un module Peltier conforme à l'invention, destiné à être alimenté depuis la carte de circuit imprimée;
- la figure 10 est une vue en coupe longitudinale de l'ensemble de connexion selon le deuxième exemple de la figure 9 avec la fiche telle qu'elle en configuration connectée et verrouillée à une embase d'un panneau de boitier d'équipement électronique, le convertisseur optoélectronique de la fiche étant connecté au contact du composant électronique monté en surface de carte de circuit imprimée de l'équipement électronique la fiche logeant et maintenant un module Peltier conforme à l'invention, destiné à être alimenté depuis la carte de circuit imprimée;

Par souci de clarté, les mêmes références désignant les mêmes éléments d'une fiche, embase, équipement électronique selon l'invention sont utilisées pour toutes les figures 1 à 10.

On précise que les termes « avant » et « arrière» se réfèrent à une fiche selon l'invention. Ainsi, la partie avant du corps de fiche est celle située du côté de l'interface avec l'embase, tandis que la partie arrière est celle située du côté par lequel le câble/cordon est logé et retenu dans la fiche.

On a représenté sur les figures 1 à 8, un premier exemple de mise en oeuvre d'ensemble de connexion d'une fiche désignée globalement par 1 à une embase 7 rapportée et fixée sur un panneau 80 d'un boitier d'équipement électronique 8 configuré pour recevoir une pluralité de signaux optique, électrique, de puissance, de données, ou toute combinaison de ces signaux.

Tel qu'illustré en figures 1 et 8, la fiche 1 est en configuration de connexion et de verrouillage à l'embase 7, comme détaillé par la suite.

L'équipement électronique 8 comprend une carte de circuit imprimé 81 sur laquelle est montée l'interface électrique 82 du convertisseur, protégé par une cage 83 environnante. L'interface 82 est connectée au convertisseur optoélectronique 10 de type QSFP/QSFP+ qui est intégré dans la fiche 1, convertisseur encore appelé *transceiver* en anglais.

La fiche 1 comporte un corps qui s'étend selon un axe longitudinal rectiligne X et qui est réalisé en deux pièces 3, 4, dont l'une constitue la partie avant 3 sous la forme générale d'une bague et l'autre, la partie arrière 4.

Le convertisseur optoélectronique ou *transceiver* 10 peut être fixé de manière amovible et interchangeable à l'intérieur d'un logement de la partie avant 3 du corps prévu à cet effet. Le *transceiver* 10 fait saillie au-delà de la partie avant 3 du corps de fiche.

Dans l'exemple illustré, le convertisseur optoélectronique 10 est au contact de la partie avant 3 du corps de la fiche 1, de telle sorte que le boîtier de ce convertisseur optoélectronique 10 est au même potentiel électrique que cette partie avant 3.

Un ou plusieurs contacts optiques 21 peuvent être reliés à une extrémité à un conducteur optique 20, notamment une fibre optique, d'un unique câble 2 et être connectés à leur autre extrémité à une entrée du *transceiver* 10. Les contacts optiques 21 sont par exemple des contacts de type LC et le convertisseur optoélectronique 10 est par exemple un transceiver de type SFP/SFP+. Pour un type QSFP/QSFP+, les contacts pourront aussi être du type férule MT.

La partie avant 3 du corps de fiche peut être en matériau conducteur électrique et réalisée par exemple en aluminium ou zamak moulé sous pression, revêtu d'une protection anticorrosive et électriquement conductrice, ou encore en matière(s) plastique(s), avec ou sans métallisation.

Un joint d'étanchéité 31 peut avantageusement être porté par la partie avant 3. Ce joint 31 permet de réaliser l'étanchéité à l'interface entre la fiche 1 et l'embase 7 dans laquelle la partie avant du corps de fiche est destinée à se loger lors de la connexion.

La partie arrière 4 quant à elle forme un fourreau, conformé pour loger l'extrémité du câble 2 supportant elle-même les contacts 21. La partie arrière 4 peut être réalisée par exemple en matière plastique.

La partie arrière 4 peut être montée flottante autour de la partie avant 3.

Comme illustré en figures 1 et 2, un levier de verrouillage 5 à deux bras 51, 52 est monté pivotant autour d'un axe 41 sur la partie arrière 4 du corps de la fiche. L'axe de pivotement 41 peut être moulé intégralement avec la partie arrière 4 du corps de fiche 1.

L'extrémité libre de chaque bras 51, comporte un crochet de verrouillage 53, 54. Le levier 5 peut être conformé avec une partie de préhension 55 qui permet de réaliser manuellement, de manière aisée, le pivotement du levier 5 autour de l'axe 41.

La fiche 1 comporte encore dans l'exemple décrit un presse-étoupe 6 de rétention du câble 2. Le presse-étoupe comprend un écrou 60, par exemple réalisé en matière plastique, destiné à se visser sur la partie arrière 40 du corps de la fiche 2 et comprimer un joint d'étanchéité 61.

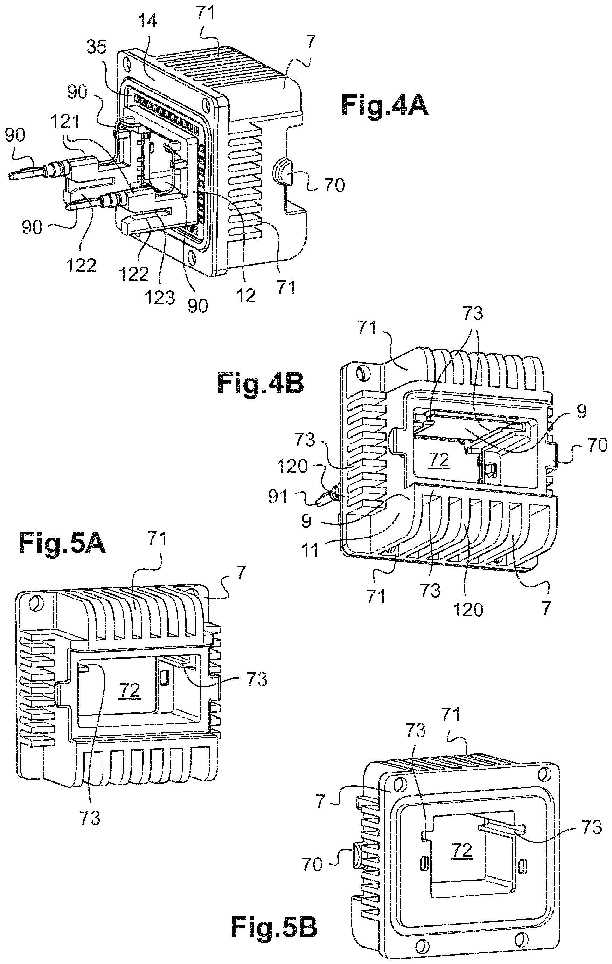

L'embase 7 montrée plus précisément en figures 5A et 5B comprend sur sa périphérie extérieure deux ergots de verrouillage 70 ainsi que des ailettes de refroidissement 71. A l'intérieur de l'embase 7 est ménagée une cavité 72 dans laquelle deux rails de guidage et maintien 73 ont été réalisés.

L'ensemble de connexion comprend en outre une pluralité de pattes flexibles 30 en matériau conducteur électrique.

Ces pattes flexibles 30 peuvent être réalisées intégralement avec la partie avant 3 du corps en étant réparties à la périphérie extérieure de cette partie avant 3.

Alternativement, elles peuvent être réalisées dans une pièce annulaire 35 comme montré en figures 3 et 4A qui vient s'agencer autour de la cavité 72 de l'embase 7.

Ces pattes flexibles 30 sont adaptées pour rester en contact mécanique avec l'intérieur de l'embase 7, lorsque la partie avant 3 du corps est logée dans cette dernière.

En outre, la présence des pattes flexibles 30 assure à coup sûr la continuité de contact entre partie avant 3 et embase 7, même en cas de désalignement maximum entre la partie avant 3 et le composant électronique 81 supporté par la carte électronique 82 de l'équipement électronique 8 auquel la fiche 1 est connectée. Lorsqu'elles sont positionnées du côté de l'embase 7, ces pattes 30 permettent en outre de connecter électriquement l'embase au panneau 80.

Selon ce premier exemple de l'invention, on prévoit d'intégrer un module Peltier 9 au sein de l'embase 7. Ce module Peltier 9 a pour fonction d'éviter la surchauffe du convertisseur optoélectronique 10 dans la configuration connectée de ses contacts avec les contacts 84 de l'interface électronique 82, lors du fonctionnement de l'équipement électronique 8.

Plus particulièrement lorsque l'équipement électronique 8 est une tête RRH en fonctionnement, la température au sein du boitier délimité par le plan P du panneau 80 peut dépasser la plage de fonctionnement du convertisseur..

Or, à cette température, le convertisseur 10 de type QSFP/QSFP+ risque de ne plus fonctionner. Aussi, l'activation du module Peltier 9 permet d'évacuer la chaleur du composant 10 vers l'embase 7 qui elle-même grâce à ses ailettes de refroidissement 71 permet la dissipation de la chaleur vers l'environnement extérieur, c'est-à-dire au-delà du plan P.

Un élément 11 en matériau à la fois compressible et conducteur thermique est logé sur le dessus du module Peltier 9. Cet élément 11 permet d'une part d'assurer la continuité thermique entre le module Peltier 9 et l'extérieur 71 de l'embase 7 et d'autre part, par sa compressibilité de venir plaquer le module Peltier 9 contre une surface d'échange thermique 32 prévue à cet effet sur la partie avant 3 du corps de fiche 1. Il permet également de compenser les défauts de forme tels que défauts de planéité ou rugosité entre les surfaces en contact et donc d'optimiser le transfert thermique vers l'extérieur.

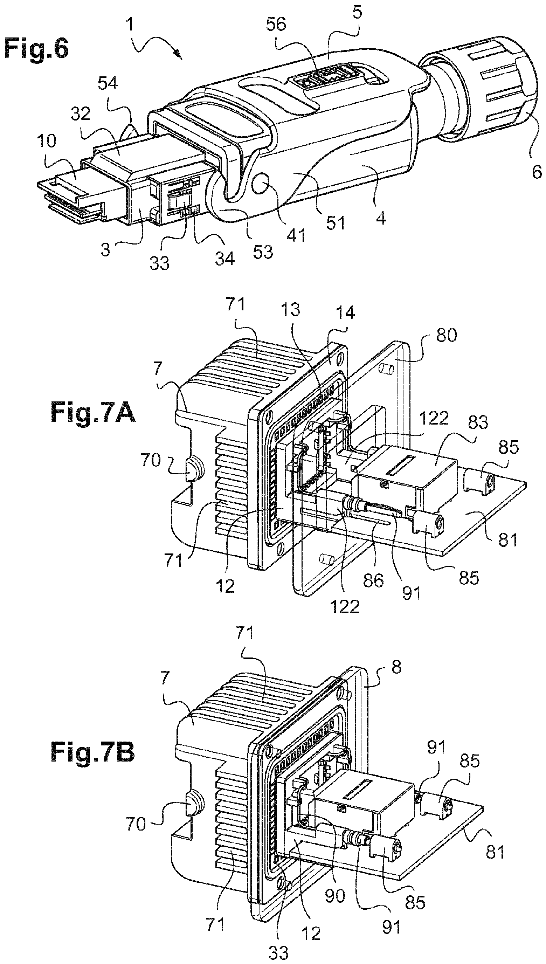

Comme montré en figure 6, cette surface d'échange thermique permet d'assurer par conduction la dissipation de chaleur du convertisseur optoélectronique 10 vers la face froide du module Peltier 9 qui est donc en appui-plan contre cette dernière. Dans le cas d'un fonctionnement dans un environnement de température plus basse que la plage de fonctionnement du convertisseur, le module Peltier 9 a un fonctionnement réversible : ainsi, en inversant la polarité de son alimentation, et il transfère la chaleur vers le convertisseur 10.

L'alimentation électrique du module Peltier 9 est faite depuis la carte imprimée 81 soit par soudure directe sur celle-ci de fils d'alimentation électrique 90 (figure 1) soit par l'intermédiaire de broches de puissance 91 reliées au moule Peltier 9 par des fils d'alimentation électrique 90 (figures 2, 3, 4A, 4B, 7A et 7B).

Plus précisément, le module Peltier 9 est inséré dans les rails de guidage et de maintien 73 de l'embase 7. Il est maintenu par les bras de logement 120 d'une pièce de support 12 qui viennent également s'insérer dans les rails 73 de l'embase 7 (figures 3 et 4B).

Cette pièce de support 12 comprend également deux logements 121 dans chacun desquels une des deux broches de puissance 91 est montée (figure 3).

Cette pièce de support 12 comprend enfin deux bras de guidage 122 en dessous et parallèles aux bras 120. Dans l'exemple illustré un des deux bras de guidage 122 est jointif avec l'un des bras de logement 120 tandis que l'autre bras 122 est séparé de l'autre bras de logement 122 par une fente de guidage 123 dont la hauteur correspond est au moins égale à l'épaisseur de la carte imprimée 81 (figure 4A).

Un joint d'étanchéité 13 peut avantageusement être porté par l'embase 7. Ce joint 13 permet de réaliser l'étanchéité à l'interface entre l'embase 7 et le panneau 80 de l'équipement électronique sur lequel l'embase 7 est fixée (figure 3).

Une plaque d'espacement 14 peut être prévue entre l'embase 7 et le panneau 8, afin d'isoler thermiquement le panneau de l'embase et ainsi d'éviter de propager la chaleur de l'équipement vers l'embase et le convertisseur.

On décrit maintenant les opérations de montage de l'embase 7 sur un panneau 80 de l'équipement avec la connexion des broches d'alimentation 91 en référence aux figures 7A et 7B.

L'opérateur amène l'embase 7 en regard de l'orifice du panneau 80 en alignant les broches d'alimentation 91 du module Peltier 9 avec les prises femelles 85 complémentaires prévues à cet effet sur la carte de circuit imprimée 81.

Les bras de guidage 122 permettent de guider l'embase 7 relativement à la carte 81 : ainsi, sur un côté latéral de l'embase 7, la carte 81 vient s'insérer dans la fente de guidage 123 tandis que sur l'autre côté latéral, la partie pleine de jonction entre le bras de logement 120 et le bras de guidage 122 vient s'insérer dans une fente de guidage 86 réalisée dans l'épaisseur de la carte 81.

Une fois la connexion des broches 91 dans les prises femelles 85 faite, l'embase 7 est fixée par vissage sur le panneau 80.

Dans cette configuration, le module Peltier 9 est opérationnel. Son déclenchement peut être réalisé à souhait par l'alimentation électrique depuis les prises femelles 85 puis par l'intermédiaire des broches 91 et des fils d'alimentation 90 qui sont reliés au module Peltier 9.

Dans cette configuration également, en contact les pattes flexibles 30 supportées par la pièce annulaire 35 sont en contact avec la paroi intérieure d'embase 7 ainsi que le panneau 80.

Une fois, l'embase 7 fixée avec le module Peltier 9 logé et maintenu en son sein, l'utilisateur peut procéder à la connexion et au verrouillage d'une fiche 1 à l'embase 7.

L'utilisateur amène la fiche 1 assemblée en regard de l'embase puis vient loger la partie avant 3 dans l'embase 7, de sorte à mettre à connecter le convertisseur 10 avec les contacts 84 du composant électronique 82 supporté par la carte de circuit imprimé 81 de l'équipement électronique 8 (figure 8).

L'utilisateur fait ensuite pivoter le levier de verrouillage 5 de la fiche de sorte à accrocher les ergots de verrouillage 70 de l'embase 7 par les crochets de verrouillage 53, 54 du levier 5. Le verrouillage de la fiche 1 à l'embase 7 est alors effectué.

Puis l'utilisateur vient bloquer le levier de verrouillage dans la position de verrouillage de la fiche 1 à l'embase 7, par coulissement d'une languette de blocage 56 vers l'arrière de la fiche 1. Le coulissement de la languette de blocage 56 provoque son déplacement de sa position de déblocage, à sa position de blocage dans laquelle elle est insérée dans une portion 62 de la partie arrière 4 du corps de fiche.

Ainsi, selon ce premier exemple de l'invention, comme visible en figure 8, le module Peltier 9 intégré dans l'embase 7, peut être déclenché à souhait depuis la carte électronique 81 par l'alimentation électrique 85, 91, 90 et ainsi évacuer la chaleur depuis la surface d'échange 32 en contact avec le convertisseur optoélectronique 10 vers l'élément conducteur 11 puis par conduction vers les ailettes de refroidissement 71 de l'embase 7.

On a représenté en figures 9 et 10 un deuxième exemple de réalisation de l'invention, selon lequel le module Peltier 9 est cette fois-ci logé et maintenu dans la fiche 1.

Plus précisément, le module Peltier 9 est logé dans une cavité 36 de la partie avant 3 du corps de fiche 1 et il est maintenu en appui-plan contre le convertisseur optoélectronique 10 au moyen de l'élément conducteur thermique 11. On peut prévoir de réaliser un collage direct du module Peltier 9 sur la face du dessus du convertisseur 10 au moyen d'un adhésif conducteur thermique.

Dans cet exemple, la fiche 1 peut comprendre une bague 34 en matériau conducteur électrique, qui supporte les pattes flexibles 30 et qui est montée coulissante autour de la partie avant 3 du corps.

Dans ce deuxième exemple, bien que non représenté, l'alimentation électrique du module Peltier 9 est faite directement depuis la carte imprimée 81 comme dans le premier exemple, c'est-à-dire par des fils d'alimentation électrique 90 par l'intermédiaire de broches sur la fiche et accouplées avec des prises femelles sur la carte imprimée.

L'invention qui vient d'être décrite permet d'assurer à coup sûr le refroidissement du convertisseur optoélectronique 10 au moyen du module Peltier 9 qui peut être déclenché à souhait depuis l'équipement électronique 8. On garantit ainsi le fonctionnement de ce dernier même en cas de température importante, typiquement au-delà de 80°C dans son environnement intérieur délimité par le panneau 80.

Les fiches et les embases selon l'invention auxquelles elles peuvent être connectées peuvent être configurées pour fonctionner à des températures comprise entre -40°C et +125°C.

En termes d'étanchéité, les fiches et/ou les embases selon l'invention peuvent satisfaire la norme IP65, IP 67, IP68, ou UL50E.

Quel que soit le mode de réalisation, le module Peltier 9 selon l'invention est intégré dans la fiche 1 ou dans l'embase 7 de l'ensemble de connexion en étant autoporté et en venant en appui-plan soit directement contre le convertisseur 10 de type QSFP à refroidir soit indirectement par l'intermédiaire de la surface d'échange thermique 32 de la partie avant 3 du corps de fiche.

D'autres variantes et avantages de l'invention peuvent être réalisés sans pour autant sortir du cadre de l'invention.

L'invention n'est pas limitée aux exemples qui viennent d'être décrits ; on peut notamment combiner entre elles des caractéristiques des exemples illustrés au sein de variantes non illustrées.

## Revendications

1. Ensemble de connexion comprenant :
- au moins une fiche (1), destinée à être montée sur au moins un câble (2) dont une extrémité supporte un ou plusieurs contacts (21, 22), comprenant un corps comprenant :
• une partie avant (3) qui s'étend selon un axe longitudinal (X), la partie avant étant adaptée pour loger et maintenir au moins un convertisseur optoélectronique ou électronique (10), de type SFP/SFP+, QSFP/QSFP+, XFP, connecté au(x) contact(s) (21) du câble;
• une partie arrière (4) formant un fourreau, conformée pour loger l'extrémité du câble supportant elle-même le(s) contact(s) ;
- au moins une embase (7) dans laquelle la partie avant (3) du corps de fiche est logée lorsque le convertisseur optoélectronique ou électronique de la fiche est connecté au(x) contact(s) supportés par une carte de circuit électronique (81) d'un équipement électronique (8);
- au moins un moyen de régulation thermique actif (9), logé et maintenu soit dans la partie avant du corps de fiche soit dans l'embase, le moyen de régulation thermique actif étant adapté pour éviter que le convertisseur optoélectronique ou électronique ne se trouve en dehors de sa plage de températures de fonctionnement dans la configuration connectée avec les contacts de la carte, lors du fonctionnement de l'équipement électronique.

2. Ensemble de connexion selon la revendication 1, le système du pilotage du module de régulation actif étant relié à un capteur de température, agencé à l'extérieur du convertisseur.

3. Ensemble de connexion selon l'une des revendications 1 ou 2, le moyen de régulation thermique actif étant un module Peltier (9) alimenté électriquement depuis la carte de circuit électronique (81) ou par les conducteurs électriques du câble provenant de la partie arrière de la fiche.

4. Ensemble de connexion selon la revendication 3, dans lequel :
- la partie avant du corps de fiche comprend une surface d'échange thermique (32) par conduction avec le convertisseur logé et maintenu à l'intérieur de la partie avant;
- l'embase comprend des rails de maintien (73) pour maintenir le module Peltier.

5. Ensemble de connexion selon la revendication4, l'embase logeant un élément (11) compressible, en matériau conducteur thermique, adapté pour appliquer un effort sur le module Peltier maintenu dans les rails, de sorte à mettre en appui-plan ce dernier contre la surface d'échange thermique de la partie avant.

6. Ensemble de connexion selon la revendication 3, le module Peltier étant logé et maintenu dans une cavité (36) de la partie avant du corps de fiche, avec un appui-plan contre le convertisseur optoélectronique.

7. Ensemble de connexion selon la revendication 6, comprenant un élément (11), compressible en matériau conducteur thermique, agencé entre l'embase et le convertisseur optoélectronique, l'élément compressible étant adapté pour appliquer un effort sur le module Peltier, de sorte à mettre en appui-plan ce dernier contre le convertisseur optoélectronique.

8. Ensemble de connexion selon l'une des revendications précédentes, l'embase comprenant, sur sa périphérie extérieure, une pluralité d'ailettes de refroidissement adaptées pour évacuer la chaleur elle-même évacuée par le module de régulation thermique actif dans l'environnement extérieur.

9. Ensemble de connexion selon l'une des revendications précédentes, comprenant une pluralité de pattes flexibles (30) en matériau conducteur électrique, réparties à la périphérie intérieure de la cavité de l'embase, les pattes flexibles étant adaptées pour rester en contact mécanique et électrique avec la périphérie de la partie avant (3), lorsque la partie avant du corps est logée dans cette dernière.

10. Ensemble de connexion selon l'une des revendications précédentes, comprenant une pluralité de pattes flexibles (30) en matériau conducteur électrique, réparties à la périphérie extérieure de la partie avant, les pattes flexibles étant adaptées pour rester en contact mécanique et électrique avec l'intérieur de l'embase lorsque la partie avant du corps est logée dans cette dernière.

11. Ensemble de connexion selon la revendication 10, la fiche (1) comprenant une bague (34) en matériau conducteur électrique, montée coulissante autour de la partie avant (3) du corps, la bague supportant les pattes flexibles (30).

12. Ensemble de connexion selon l'une des revendications 10 ou 11, la pluralité des pattes flexibles (30) étant réalisée dans une pièce annulaire (35) agencée autour de la cavité de l'embase.

13. Ensemble de connexion selon l'une des revendications précédentes, la partie avant de la fiche (1) comportant des moyens de maintien amovible du convertisseur optoélectronique.

14. Fiche (1), destinée à être montée sur au moins un câble (2) dont une extrémité supporte un ou plusieurs contacts (21, 22), comprenant un corps comprenant :
- une partie avant (3) qui s'étend selon un axe longitudinal (X), la partie avant étant conformée pour venir se loger dans une embase (7), la partie avant étant adaptée pour loger et maintenir au moins un convertisseur optoélectronique ou électronique (10) connecté au(x) contact(s) (21) du câble;
- une partie arrière (4) formant un fourreau, conformée pour loger l'extrémité du câble supportant elle-même le(s) contact(s) ;
- au moins un moyen de régulation thermique actif (9), logé et maintenu dans la partie avant du corps de fiche.

15. Embase (7) destinée à loger la partie avant (3) du corps d'une fiche, dans laquelle au moins un moyen de régulation thermique actif (9) est logé et maintenu.
